# EUROPÄISCHE PATENTSCHRIFT

(11) **EP 3 665 712 B1**
(45) Veröffentlichungstag und Bekanntmachung des Hinweises auf die Patenterteilung: **07.08.2024**
(21) Anmeldenummer: 18758558.3
(22) Anmeldetag: 09.08.2018
(51) Int. Cl.: H01F 41/02, H01F 27/24, B21C 47/18, B21C 47/34, B21C 51/00, B21D 28/02, B21D 43/11

(54) **VERFAHREN UND ROBOTERSYSTEM ZUR HERSTELLUNG VON TRANSFORMATORKERNEN**
METHOD OF AND ROBOT SYSTEM FOR MANUFACTURING TRANSFORMER CORES
PROCEDE ET SYSTEME DE ROBOT POUR LA FABRICATION DE NOYAUX DE TRANSFORMATEUR

(30) Priorität: 10.08.2017 DE 102017007548
(43) Veröffentlichungstag der Anmeldung: 17.06.2020
(73) Patentinhaber: Heinrich Georg GmbH Maschinenfabrik, 57223 Kreuztal (DE)
(72) Erfinder: LOTH, Volker, 57258 Freudenberg (DE); FRIEDRICH, Jost, 57271 Hilchenbach (DE)
(74) Vertreter: advotec.
(86) Internationale Anmeldenummer: PCT/EP2018/071688
(87) Internationale Veröffentlichungsnummer: WO 2019/030350

(56) Entgegenhaltungen:
- EP-A1- 0 184 563
- EP-A2- 2 009 652
- EP-A2- 2 660 836
- DE-A1- 2 530 309
- DE-A1- 2 613 150

## Beschreibung

Die Erfindung betrifft ein Verfahren und ein Robotersystem zur Herstellung von Transformatorkernen.

Die aus dem Stand der Technik bekannten Anlagen zur Herstellung von Transformatorkernen und sind entsprechend einem Prozessablauf so aufgebaut, dass zunächst Transformatorbleche aus Blechstreifen mittels einer Schneidvorrichtung ausgeschnitten werden. Die Blechstreifen sind auf einer Bandstahlrolle bevorratet, welche von einem Haspelkopf einer Haspel gehaltert ist. Die Haspel kann eine Mehrzahl von Haspelköpfen mit Bandstahlrollen aufweisen, sodass verschiedene Blechstreifen der Schneidvorrichtung nach Bedarf zugeführt werden können. Ein Wechsel von Blechstreifen bzw. eine Zuführung eines Blechstreifens zu der Schneidvorrichtung kann beispielsweise manuell oder auch über ein Transportband erfolgen, wobei jedoch der Wechsel des Blechstreifens bzw. der Bandstahlrolle zeitaufwendig ist.

Die in der Schneidvorrichtung geschnittenen Bleche können unterschiedlichste Geometrien aufweisen, da ein Transformatorkern regelmäßig aus Blechen unterschiedlicher Gestalt zusammengesetzt wird. Die Bleche können von einem Transportband von der Schneidvorrichtung weggeführt und zur Weiterverarbeitung bevorratet bzw. gestapelt werden. Ein Zusammensetzen des Transformatorkerns aus den Blechen erfolgt auf einem sogenannten Legetisch. An dem Legetisch sind Fädelbolzen und/oder Blechanschläge als Positionierhilfe fest montiert und die Bleche werden an den Fädelbolzen bzw. Blechanschlägen zu dem Transformatorkern zusammengesetzt bzw. gestapelt. Um die Bleche örtlich festlegen zu können sind zumindest immer zwei Positionierhilfen erforderlich. Die Bleche weisen insbesondere Bohrungen bzw. Ausschnitte auf, in die die Fädelbolzen eingreifen können. Die Bleche werden auf die Fädelbolzen aufgesteckt bzw. entlang von Blechanschlägen gestapelt und so lagegenau relativ zueinander positioniert. Das Bilden eines Stapels Bleche auf dem Legetisch kann prinzipiell manuell, aber auch automatisiert erfolgen. Wesentlich ist, dass stets eine ausreichende Anzahl unterschiedlicher Bleche zum Aufbau des Transformatorkerns zur Verfügung steht, um beispielsweise Stillstandszeiten zu vermeiden.

Da der Legetisch stets für einen Transformatorkern mit einer in Führungen verschiebbaren Position der Positionierhilfen aufgebaut wird, kann ein Legetisch immer nur nach einem Umbau der Positionierhilfen zur Herstellung einer Art eines Transformatorkerns genutzt werden. Wenn mit einer Anlage verschiedenste Arten von Transformatorkernen hergestellt werden sollen, wird eine entsprechend große Anzahl Legetische für Kernformen außerhalb der Verschiebebereiche der Positionierhilfen benötigt, die vorgehalten werden müssen.

Ein am 6.Juni 2016 veröffentlichtes Video (https://www.youtube.com/watch?v=afn9q_vDEC4) einer Roboter-Stapelvorrichtung von L.A.E. LUGHESE ATTREZZATURE PER L'ELETTROMECCANICA S.R.L offenbart ein Verfahren und ein Robotersystem zur Herstellung von Transformatorkernen gemäss dem Oberbegriff der vorliegenden Ansprüche 1 und 7.

Die DE 26 13 150 A1 offenbart ein Verfahren zur Herstellung von Transformatorkernen mit einem Robotersystem, wobei Bleche mittels einer Fördervorrichtung einer Kernlegemaschine bzw. einer Blechhubeinrichtung zugeführt werden und auf einem Legetisch zusammen mit weiteren Blechen zu einem Transformatorkern geschichtet werden. Dabei richtet eine weitere Blechhubeinrichtung die weiteren Bleche auf dem Legetisch aus. Diese weiteren Bleche werden an einer Ablageposition an einer Längsseite des Legetisches schichtgerecht gestapelt bereitgestellt. Weiter können zwei Legetische sowie zwei Ablagepositionen vorgesehen sein.

Ein weiteres Verfahren zur Herstellung von Transformatorkernen offenbart die EP 2 009 652 A2. Dabei werden Bleche, aus denen ein Transformatorkern ausgebildet wird, mittels einer Fördervorrichtung gefördert und auf einem oder mehreren Stapeltischen von Stapelstationen abgestapelt. Weiter umfassen die Stapelstationen Ablagetische sowie Handlingsysteme zum Verbringen von Blechen in eine rechtwinklige Stellung zu einer Förderrichtung. Auch weisen die Stapelstationen Aufnahmeeinrichtungen zum Stapeln von Blechen auf.

Aus der EP 2 660 836 A2 ist eine Stapelanlage zur Herstellung von Transformatorkernen bekannt, wobei die Stapelanlage zwei Stapelstationen aufweist.

Die DE 25 30 309 A1 beschreibt ein Robotersystem zur Herstellung von Transformatorkernen, welches eine mit Wagen ausgebildete Fördervorrichtung, einen Roboter sowie eine Steuereinrichtung zur Steuerung des Roboters und der Fördervorrichtung umfasst. Mittels des Roboters können diesem von der Fördervorrichtung zugeführte Bleche auf einen Legetisch zu einem Transformatorkern gestapelt werden.

Letztlich betrifft auch die EP 0 184 563 A1 ein Verfahren zur Herstellung von Tranformatorkernen mit einem Robotersystem.

Der vorliegenden Erfindung liegt daher die Aufgabe zugrunde, ein Verfahren sowie ein Robotersystem zum Herstellen von Transformatorkernen vorzuschlagen, das eine kostenoptimierte Herstellung von Transformatorkernen ermöglicht.

Diese Aufgabe wird durch ein Verfahren mit den Merkmalen des Anspruchs 1 und ein Robotersystem mit den Merkmalen des Anspruchs 7 gelöst.

Bei dem erfindungsgemäßen Verfahren zur Herstellung von Transformatorkernen mit einem Robotersystem werden Bleche, aus denen ein Transformatorkern ausgebildet wird, mittels eines mehrachsigen Roboters des Robotersystems auf zumindest zwei Legetischen aufgenommen, wobei die Bleche mittels einer Fördervorrichtung dem Roboter zugeführt und benachbart dem Roboter an zumindest zwei Ablagepositionen für jeweils unterschiedliche Bleche gestapelt werden, wobei der Roboter und die Fördervorrichtung von einer Steuereinrichtung gesteuert werden, wobei mittels des zwischen und oberhalb der Legetische angeordneten Roboters Bleche von den Ablagepositionen aufgenommen und auf den Legetischen gestapelt werden, wobei die Legetische jeweils zumindest zwei Fädelbolzen und/oder Blechanschläge, die als Positionierhilfe für die Bleche dienen, aufweisen, wobei die Legetische eine Positionierfläche für die Fädelbolzen bzw. Blechanschläge ausbilden und mit den Fädelbolzen bzw. Blechanschlägen bestückt sind, wobei die Legetische und die Fädelbolzen und/oder Blechanschläge derart ausgebildet sind, dass eine freie Positionierung und eine ortsunabhängige Befestigung der Fädelbolzen bzw. Blechanschläge innerhalb der Positionierfläche an einer beliebigen Stelle der Positionierfläche möglich sind.

Die Bleche werden zuvor von einer Schneidvorrichtung aus Blechstreifen ausgeschnitten und mittels der Fördervorrichtung, die beispielsweise ein Förderband, ein Rollenband oder ähnliches sein kann, zugeführt. Die Fördervorrichtung ist dabei so ausgebildet, dass die Bleche an den zumindest zwei Ablagepositionen abgelegt bzw. gestapelt werden. Dabei ist vorgesehen, dass Bleche gleicher Art mit gleicher Grundform den Ablagepositionen jeweils zugeführt werden, sodass an den Ablagepositionen ausschließlich Stapel im Wesentlichen übereinstimmender Bleche gebildet werden, wobei auch unterschiedliche Bleche in einer Ablageposition gestapelt werden können. Die Ablagepositionen sind so relativ zu dem Roboter angeordnet, dass dieser Bleche oder Blechpakete von den Ablagepositionen aufnehmen kann. Der Roboter und die Fördereinrichtungen werden von der Steuereinrichtung gesteuert, sodass der Roboter stets auf Anlagepositionen zugreift an denen sich auch Bleche befinden. Da zumindest zwei Legetische und zwei Ablagepositionen vorhanden sind, besteht nicht die Gefahr, dass durch eine leere Ablageposition Stillstandszeiten des Roboters anfallen. Der Roboter kann in diesem Fall Bleche von der noch vollen Ablageposition entnehmen und auf den Legetischen stapeln. Für den Fall, dass auf einem Legetisch Bleche, die sich sonst auf der leeren Ablageposition befinden, gestapelt werden müssten, kann der Roboter noch weiter Bleche von der noch vollen Ablageposition auf den weiteren Legetisch stapeln. Auch so kann vermieden werden, dass es zu Stillstandszeiten des Roboters bei noch in einer Ablageposition vorhandenen Blechen kommt. Eine geeignete Zuordnung von in den jeweiligen Ablagepositionen vorhandenen Blechen zu Legetischen wird über die Steuereinrichtung gesteuert. Die Fördervorrichtung kann dazu an den Ablagepositionen Mittel zur Erfassung einer Anzahl von Blechen aufweisen. Weiter kann über die Steuereinrichtung anhand der vom Roboter ausgeführten Arbeitsschritte ein Arbeitsfortschritt der auf den Legetischen gestapelten Bleche bzw. des jeweiligen Transformatorkerns bestimmt werden. Durch die Einbindung der Steuereinrichtung mit den zumindest zwei Ablagepositionen und den zwei Legetischen können Stillstandszeiten besonders wirkungsvoll vermieden und damit eine Herstellung von Transformatorkernen kostengünstiger gestaltet werden.

Somit kann die Steuereinrichtung eine Legereihenfolge der Bleche auf den Legetischen in Abhängigkeit einer Verfügbarkeit der Bleche an den Ablagepositionen anpassen. Die Steuereinrichtung kann Mittel zur Datenverarbeitung, wie beispielsweise einen Computer umfassen und/oder eine SPS-Steuerung sein. Die Gestalt des herzustellenden Transformatorkerns kann sich aus den gewünschten physikalischen Eigenschaften und den davon abzuleitenden Maßen ergeben, die mit einem Kernkonfigurator für Transformatorkerne bestimmt bzw. berechnet werden können. Der Kernkonfigurator kann insbesondere eine Software sein. Ebenso können Maße für Bleche des Transformatorkerns aus dem Kernkonfigurator abgeleitet werden, die dann von der Steuereinrichtung zur Berechnung einer Stapelform bzw. Legereihenfolge genutzt werden können.

Der Roboter kann ein einzelnes Blech oder ein Blechpaket an der Ablageposition entnehmen. So kann beispielsweise auch vorgesehen sein, dass an einer Ablageposition ein Blechpaket mit einer definierten Anzahl von Blechen zur Verfügung gestellt wird, sodass der Roboter dieses Blechpaket entnehmen und auf den Legetisch absetzen bzw. stapeln kann. Der Roboter kann über einen Roboterarm verfügen, an dessen Ende beispielsweise ein Vakuumsauger oder auch ein geeigneter Greifer angeordnet ist.

Darüber hinaus kann vorgesehen sein, eine Mehrzahl von Transformatorkernen auf einem einzelnen Legetisch aufzubauen. Insbesondere wenn ein Steuersystem für eine Anlage zur Herstellung von Transformatorkernen vorhanden ist, kann dieses Steuersystem eine optimierte Verteilung von transformatorkernen auf einem Legetisch berechnen.

Der Roboter kann zumindest zwei Fädelbolzen und/oder Blechanschläge als Positionierhilfe für die Bleche auf einer Positionierfläche der jeweiligen Legetische positionieren und/oder entfernen, wobei der Roboter nach der Positionierung der Fädelbolzen bzw. Blechanschläge die Bleche an den Fädelbolzen bzw. Blechanschläge stapeln kann. So kann ein Haltesystem zur Befestigung der Fädelbolzen an dem Legetisch so ausgebildet sein, dass eine prinzipiell freie Positionierung der Fädelbolzen und/oder Blechanschläge sowie deren unabhängige Befestigung an einer beliebigen Stelle der Positionierfläche möglich sind. Eine Position der beispielsweise Fädelbolzen ist daher nicht mehr an dafür an dem Legetisch vorgesehenen Befestigungsstellen oder ein Befestigungsraster gebunden, wodurch eine flexible und beliebige, an die Geometrie des herzustellenden Transformatorkerns angepasste Anordnung der Fädelbolzen auf dem Legetisch möglich wird. Durch die Möglichkeit die Fädelbolzen mittels des Roboters auf den Legetisch bzw. der Positionierfläche des Legetischs in einer beliebigen Position anordnen zu können, wird es möglich, für unterschiedlichste Arten von Transformatoren nach Bedarf Legetische aufzubauen. Diese Legetische müssen dann nicht mehr wie bei der herkömmlichen, ortsabhängigen Befestigung der Fädelbolzen in großer Stückzahl vorgehalten werden, da eine Bestückung der Legetische mit den Fädelbolzen durch das Positioniersystem unmittelbar vor dem Stapeln eines Transformatorkerns erfolgen kann. Nach der Entnahme des fertigen Transformatorkerns von dem Legetisch können die Fädelbolzen von dem Legetisch mittels des Roboters wieder entfernt und gegebenenfalls wieder neu positioniert werden, um einen Transformatorkern mit abweichender Gestalt auszubilden. Prinzipiell ist so die Herstellung verschiedenster Transformatorkerne mit nur einem Legetisch möglich. Die Anzahl von Legetischen kann so wesentlich reduziert, ein Umbauaufwand für Fädelbolzen und/oder Blechanschläge gemindert und die Kosten zur Herstellung unterschiedlicher Transformatorkerne wesentlich gesenkt werden.

Von einem Steuersystem einer Anlage zur Herstellung von Transformatorkernen können in Abhängigkeit von einem Transformatorkern beschreibenden Bauteildaten Steuerbefehle an die Steuereinrichtung übermittelt werden. Das Steuersystem kann beispielsweise einen Kernkonfigurator umfassen. Weiter kann vorgesehen sein, dass das Steuersystem die gesamte Anlage zur Herstellung von Transformatorkernen steuert. Die im Steuersystem vorhandenen Bauteildaten eines Transformatorkerns können in Steuerbefehle umgewandelt werden, die an die Steuereinrichtung übermittelt werden. Beispielsweise kann das Steuersystem bereits eine Positionen von Fädelbolzen auf einer Positionierfläche bestimmen bzw. berechnen und der Steuereinrichtung Steuerbefehle zur Bestückung eines Legetisches mit Fädelbolzen an den berechneten Positionen übermitteln. Das Steuersystem kann ebenfalls Mittel zur Datenverarbeitung, wie einen Computer mit einer Software, umfassen. Die Bauteildaten können beispielsweise eine Stapelreihenfolge unterschiedlicher Bleche betreffen.

Mittels des Steuersystems kann eine Positionierung von Fädelbolzen und/oder Blechanschlägen auf den Legetischen, die Ablageposition für die jeweiligen Bleche und/oder eine Schneidsequenz einer Schneidvorrichtung für Bleche ermittelt werden. Beispielsweise ist es dann auch möglich mit dem Steuersystem die verschiedenen Arbeitsstationen der Anlage zur Herstellung von Transformatorkernen so aufeinander abzustimmen, dass ein optimaler Materialfluss bei geringen Durchlaufzeiten realisiert werden kann. Die Schneidfrequenz einer Schneidvorrichtung für Bleche kann beispielsweise an eine Menge von Blechen an Ablagepositionen an einem Roboter angepasst werden, sodass stets eine ausreichende Menge Bleche an den Ablagepositionen zur Verfügung steht. Auch können mehr als zwei Ablagepositionen vorgesehen sein, wenn der Transformatorkern aus einer größeren Anzahl unterschiedlicher Bleche zusammengesetzt wird. Weiter ist es möglich mittels des Steuersystems einen Materialfluss soweit zu optimieren, dass Stillstandszeiten der Anlage und insbesondere des Robotersystems weitestgehend ausgeschlossen werden können. Weiter können die Legetische so mit beispielsweise Fädelbolzen bestückt werden, dass bestimmte Typen von Transformatorkernen in Abhängigkeit eines Materialflusses hergestellt werden können. Wenn beispielsweise zur Herstellung eines Transformatorkerns erforderliche Bandstahlrollen nicht mehr zur Verfügung stehen, kann das Steuersystem die Herstellung anderer Transformatorkerne initiieren, für die ausreichend Material vorhanden ist. Das Steuersystem kann dann Steuerbefehle zum Umbau von Legetischen an die Steuereinrichtung übermitteln sowie eine Herstellung und zur Verfügungstellung von entsprechenden Blechen initiieren.

Das erfindungsgemäße Robotersystem zur Herstellung von Transformatorkernen umfasst einen mehrachsigen Roboter, zumindest zwei Legetische zur Aufnahme von Blechen, aus denen ein Transformatorkern ausbildbar ist, eine Fördervorrichtung zur Zuführung von Blechen und eine Steuereinrichtung zur Steuerung des Roboters und der Fördervorrichtung, wobei die Fördervorrichtung benachbart dem Roboter zumindest zwei Ablagepositionen für jeweils unterschiedliche Bleche aufweist, wobei den Ablagepositionen die jeweiligen Bleche zuführbar und an den Ablagepositionen stapelbar sind, wobei der Roboter zwischen und oberhalb der Legetische angeordnet ist, wobei mittels des Roboters Bleche von den Ablagepositionen aufnehmbar und auf den Legetischen stapelbar sind, wobei die Legetische jeweils zumindest zwei Fädelbolzen und/oder Blechanschläge, die als Positionierhilfe für die Bleche dienen, aufweisen, wobei die Legetische eine Positionierfläche für die Fädelbolzen bzw. Blechanschläge ausbilden und mit den Fädelbolzen bzw. Blechanschlägen bestückt sind, wobei die Legetische und die Fädelbolzen und/oder Blechanschläge derart ausgebildet sind, dass eine freie Positionierung und eine ortsunabhängige Befestigung der Fädelbolzen bzw. Blechanschläge innerhalb der Positionierfläche an einer beliebigen Stelle der Positionierfläche möglich sind. Zu den Vorteilen des Robotersystems wird auf die Vorteilsbeschreibung des erfindungsgemäßen Verfahrens verwiesen.

Erfindungsgemäß weisen die Legetische jeweils zumindest zwei Fädelbolzen und/oder Blechanschläge auf, die als Positionierhilfe für die Bleche dienen, wobei die Legetische eine Positionierfläche für die Fädelbolzen bzw. Blechanschläge ausbilden und mit den Fädelbolzen bzw. Blechanschlägen bestückt sind. Erfindungsgemäß sind die Legetische und die Fädelbolzen und/oder Blechanschläge derart ausgebildet, dass eine freie Positionierung und eine ortsunabhängige Befestigung der Fädelbolzen bzw. Blechanschläge innerhalb der Positionierfläche an einer beliebigen Stelle der Positionierfläche möglich sind. Die Position der beispielsweise Fädelbolzen ist dann nicht mehr an dafür an den Legetischen vorgesehenen Befestigungsstellen oder ein Befestigungsraster gebunden, wodurch eine flexible und beliebige, an die Geometrie des herzustellenden Transformatorkerns angepasste Anordnung der Fädelbolzen auf den Legetischen möglich wird.

Durch die Möglichkeit die Fädelbolzen auf die Legetische bzw. der Positionierfläche der Legetische in einer beliebigen Position anordnen zu können, wird es möglich, für unterschiedlichste Arten von Transformatoren nach Bedarf Legetische aufzubauen.

Der Roboter kann zwischen zwei parallelen Reihen aus jeweils zumindest zwei oder mehr Legetischen angeordnet sein. Werden mehr als zwei Legetische verwendet, ist es vorteilhaft diese in parallelen Reihen anzuordnen und den Roboter zwischen den parallelen Reihen so zu positionieren, dass der Roboter auf die Ablagepositionen und die Legetische zugreifen kann.

Sofern ein Bewegungsbereich des Roboters in Bezug auf eine Länge der parallelen Reihen nicht ausreichend sein sollte, kann der Roboter parallel zu den Reihen verfahrbar ausgebildet sein. Da der Roboter prinzipiell zwischen und oberhalb der Legetische angeordnet sein muss, damit der Roboter auf die Legetische von oben Bleche ablegen kann, kann die Fördervorrichtung auch unterhalb des Roboters, zwischen den beiden Legetischen bzw. den parallelen Reihen angeordnet sein.

Je nach Anzahl der Legetische kann das Robotersystem eine Mehrzahl von Robotern aufweisen, die zwischen den Reihen und oberhalb der Ablagepositionen verfahrbar angeordnet sind. Sofern eine ausreichende Anzahl von Blechen an den Ablagepositionen zur Verfügung gestellt wird kann durch den Einsatz mehrerer Roboter ein Zusammensetzen von Transformatorkernen aus Blechen noch weiter beschleunigt werden.

Die Fördervorrichtung kann je Legetisch eine Ablageposition ausbilden, wobei die Ablagepositionen benachbart dem Legetisch angeordnet sein können. Ein Transportweg eines Blechs von der Ablageposition zu dem Legetisch kann so minimiert werden, wodurch der Roboter dann besonders effektiv einsetzbar ist.

Die Ablageposition kann mit Anschlägen und/oder einer Zentriereinrichtung zur lagegenauen Anordnung von Blechen ausgebildet sein. Die lagegenaue Anordnung der Bleche begünstigt ein lagegenaues Absetzen der Bleche auf den Legetischen. Weiter wird es so einfacher möglich auch an der Ablageposition ein Blechpaket zusammenzustellen, ohne dass die Bleche des Blechpakets hinsichtlich Ihrer Lage relativ zueinander noch weiter korrigiert werden müssten. Die Fördervorrichtung kann auch so ausgebildet sein, dass die Ablagepositionen nach Bedarf an beispielsweise einem Fließband für Bleche automatisiert eingerichtet oder entfernt werden kann. Eine Erkennung von Blechen auf dem Förderband kann einfach mittels Bildverarbeitung erfolgen, wobei die Bleche dann mit entsprechenden Fördermitteln zu den jeweiligen Ablagepositionen ausgeschleust werden können.

Der Legetisch kann mittels eines selbstfahrenden Wagens des Robotersystems transportierbar sein. Der Legetisch kann dann mittels der Steuereinrichtung nach Vorgabe eines Kernkonfigurators gesteuert werden und die vorgegebenen Positionen im Produktionsablauf anfahren. Auch kann ein Transport von Bandstahlrollen zu einer Haspel mit dem Wagen erfolgen.

Weitere vorteilhafte Ausführungsformen eines Robotersystems ergeben sich aus den Merkmalsbeschreibungen der auf den Anspruch 1 rückbezogenen Unteransprüche.

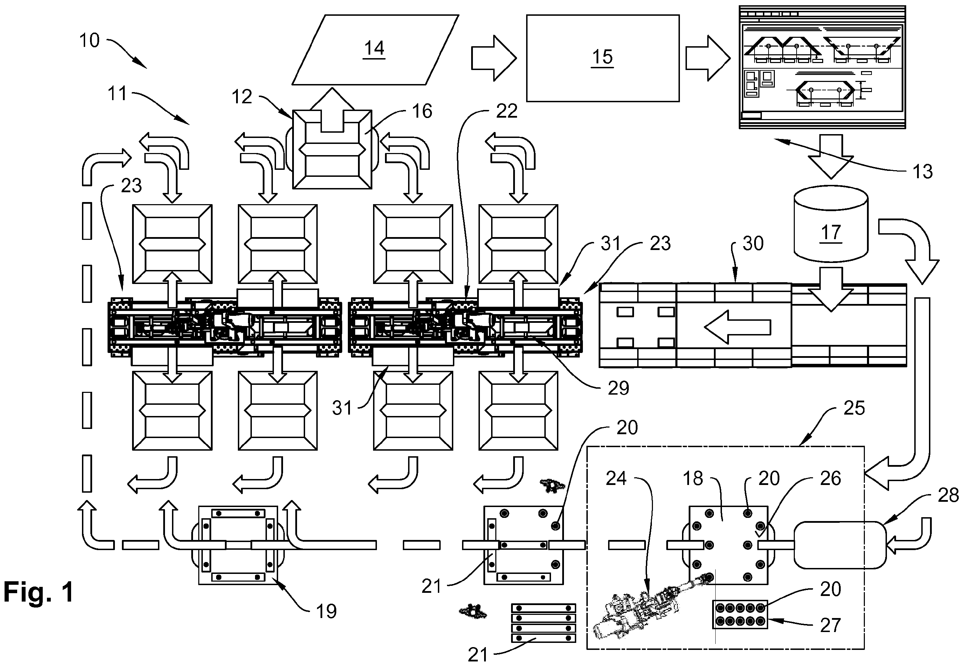

Nachfolgend wird eine Ausführungsform der Erfindung unter Bezugnahme auf die beigefügte Zeichnung näher erläutert.

Die **Figur** zeigt eine schematische Darstellung einer Anlage 10 mit einer Vorrichtung 11 zur Herstellung von Transformatorkernen 12. Die Anlage 10 umfasst ein Steuersystem 13 welches zur Steuerung der Anlage 10 dient. Mit dem Steuersystem 13 werden die Transformatorkerne 12 beschreibende Bauteildaten 14 mittels eines sogenannten Kernkonfigurators 15 verarbeitet, sodass Bleche 16 aus denen der Transformatorkern 12 ausgebildet wird, mit ihren Abmessungen berechnet werden. Das Steuersystem 13 übermittelt Steuerbefehle bzw. Daten zur Herstellung des Transformatorkerns 12 an eine Steuereinrichtung 17, die dann mit entsprechenden Steuerbefehlen die Herstellung des Transformatorkerns 12 initiiert.

Die Vorrichtung 11 umfasst unter anderem eine Anzahl von Legetischen 18 mit einem Haltesystem 19 zur Aufnahme von Blechen 16. Das Haltesystem 19 weist zumindest zwei Fädelbolzen 20 und in der hier dargestellten Ausführungsform Unterbauten 21 zur Auflage der Bleche 16 auf. Die Bleche 16 sind mit hier nicht dargestellten Bohrungen ausgebildet und werden auf die Fädelbolzen 20 aufgelegt bzw. aufgesteckt. Das Auflegen der Bleche 16 auf die Fädelbolzen 20 bzw. den Legetisch 18 erfolgt mittels eines Roboters 22 eines Robotersystems 23. Die Positionierung der Fädelbolzen 20 erfolgt ebenfalls mittels eines Roboters 24 eines Positioniersystems 25 auf einer Positionierfläche 26 des Legetischs 18. Die Positionierfläche 26 ist eben ausgebildet, sodass eine freie Positionierung und ortunabhängige Befestigung der Fädelbolzen 20 auf der Positionierfläche 26 nach den Vorgaben des Steuersystems 13 erfolgen kann. Die Fädelbolzen 20 sind in einem Magazin 27 bevorratet und werden mit dem Roboter 24 auf der Positionierfläche 26 angeordnet oder von dieser entfernt. Der Legetisch 18 wird dazu mittels eines selbstfahrenden Wagens 28 transportiert. Der Wagen 28 transportiert den Legetisch 18 zu den hier dargestellten Robotersystemen 23 an denen eine Bestückung des Legetischs 18 mit Blechen 16 bzw. ein Stapeln der Bleche 16 zu dem Transformatorkern 12 erfolgt. Nach dem Fertigstapeln des Transformatorkerns 12 wird der Legetisch 18 wieder mit dem Wagen 28 von den Robotersystem 23 wegtransportiert.

Den Robotersystemen 23 wird mittels einer Fördervorrichtung 29 eine Anzahl Bleche 16 von einer Schneidvorrichtung 30 zugeführt, und benachbart dem jeweiligen Roboter 22 an zwei Ablagepositionen 31 für jeweils unterschiedliche Bleche 16 gestapelt. Eine Steuerung des Roboters 22 bzw. der Ablageposition 31 erfolgt hier ebenfalls mittels der Steuereinrichtung 17. Der Roboter 22 ergreift von den jeweiligen Ablagepositionen 31 die Bleche 16 und positioniert diese an den Fädelbolzen 20 auf dem Legetisch 18, bis der Transformatorkern 12 ausgebildet ist. Der Roboter 22 ist dabei oberhalb der Fördervorrichtung 29 verfahrbar, sodass der Roboter 22 gleichzeitig vier Legetische 18 mit Blechen 16 bestücken kann.

Die hier nur schematisch dargestellte Schneidvorrichtung 30 dient zum Schneiden der Bleche 16 und wird von der Steuereinrichtung 17 gesteuert. In der Schneidvorrichtung 30 werden hier nicht dargestellte Blechstreifen so zugeschnitten, dass die Bleche 16 ausgebildet werden. Der Schneidvorrichtung 30 werden dazu hier nicht dargestellte Blechstreifen von Bandstahlrollen zugeführt.

## Patentansprüche

1. Verfahren zur Herstellung von Transformatorkernen (12) mit einem Robotersystem (23), wobei Bleche (16), aus denen ein Transformatorkern ausgebildet wird, mittels eines mehrachsigen Roboters (22) des Robotersystems auf zumindest zwei Legetischen (18) aufgenommen werden, wobei die Bleche mittels einer Fördervorrichtung (29) dem Roboter zugeführt und benachbart dem Roboter an zumindest zwei Ablagepositionen (31) für jeweils unterschiedliche genannte Bleche gestapelt werden, wobei der Roboter und die Fördervorrichtung von einer Steuereinrichtung (17) gesteuert werden, wobei mittels des zwischen und oberhalb der Legetische angeordneten Roboters genannte Bleche von den Ablagepositionen aufgenommen und auf den Legetischen gestapelt werden, wobei die Legetische jeweils zumindest zwei Fädelbolzen (20) und/oder Blechanschläge, die als Positionierhilfe für die Bleche (16) dienen, aufweisen, wobei die Legetische eine Positionierfläche (26) für die Fädelbolzen bzw. Blechanschläge ausbilden und mit den Fädelbolzen bzw. Blechanschlägen bestückt sind, **dadurch gekennzeichnet, dass**
die Legetische und die Fädelbolzen und/oder Blechanschläge derart ausgebildet sind, dass eine freie Positionierung und eine ortsunabhängige Befestigung der Fädelbolzen bzw. Blechanschläge innerhalb der Positionierfläche an einer beliebigen Stelle der Positionierfläche möglich sind.

2. Verfahren nach Anspruch 1,
**dadurch gekennzeichnet,**
**dass** die Steuereinrichtung (17) eine Legereihenfolge der Bleche (16) auf den Legetischen (18) in Abhängigkeit einer Verfügbarkeit der Bleche an den Ablagepositionen (31) anpasst.

3. Verfahren nach Anspruch 1 oder 2,
**dadurch gekennzeichnet,**
**dass** der Roboter (22) ein einzelnes genanntes Blech (16) oder ein Blechpaket der genannten Bleche an einer genannten Ablageposition (31) entnimmt.

4. Verfahren nach einem der vorangehenden Ansprüche,
**dadurch gekennzeichnet,**
**dass** eine Mehrzahl von Transformatorkernen (12) auf einem der Legetische (18) aufgebaut wird.

5. Verfahren nach einem der vorangehenden Ansprüche,
**dadurch gekennzeichnet,**
**dass** von einem Steuersystem (13) einer Anlage (10) zur Herstellung von Transformatorkernen (12) in Abhängigkeit von einen Transformatorkern beschreibenden Bauteildaten Steuerbefehle an die Steuereinrichtung (17) übermittelt werden.

6. Verfahren nach Anspruch 5,
**dadurch gekennzeichnet,**
**dass** mittels des Steuersystems (13) eine Positionierung von genannten Fädelbolzen (20) und/oder Blechanschlägen auf den Legetischen (18), die Ablagepositionen (31) für die jeweiligen Bleche (16) und/oder eine Schneidsequenz einer Schneidvorrichtung (30) für die Bleche ermittelt wird.

7. Robotersystem (23) zur Herstellung von Transformatorkernen (12), wobei das Robotersystem einen mehrachsigen Roboter (22), zumindest zwei Legetische (18) zur Aufnahme von Blechen (16), aus denen ein Transformatorkern ausbildbar ist, eine Fördervorrichtung (29) zur Zuführung der Bleche und eine Steuereinrichtung (17) zur Steuerung des Roboters und der Fördervorrichtung umfasst, wobei die Fördervorrichtung benachbart dem Roboter zumindest zwei Ablagepositionen (31) für jeweils unterschiedliche genannte Bleche aufweist, wobei den Ablagepositionen die jeweiligen Bleche zuführbar und an den Ablagepositionen stapelbar sind, wobei der Roboter zwischen und oberhalb der Legetische angeordnet ist, wobei mittels des Roboters genannte Bleche von den Ablagepositionen aufnehmbar und auf den Legetischen stapelbar sind, wobei die Legetische jeweils zumindest zwei Fädelbolzen (20) und/oder Blechanschläge, die als Positionierhilfe für die Bleche (16) dienen, aufweisen, wobei die Legetische eine Positionierfläche (26) für die Fädelbolzen bzw. Blechanschläge ausbilden und mit den Fädelbolzen bzw. Blechanschlägen bestückt sind,
**dadurch gekennzeichnet, dass** die Legetische
und die Fädelbolzen und/oder Blechanschläge derart ausgebildet sind, dass eine freie Positionierung und eine ortsunabhängige Befestigung der Fädelbolzen bzw. Blechanschläge innerhalb der Positionierfläche an einer beliebigen Stelle der Positionierfläche möglich sind.

8. Robotersystem nach Anspruch 7,
**dadurch gekennzeichnet,**
**dass** der Roboter (22) zwischen zwei parallelen Reihen aus jeweils zumindest zwei oder mehr Legetischen (18) angeordnet ist.

9. Robotersystem nach Anspruch 8,
**dadurch gekennzeichnet,**
**dass** der Roboter (22) parallel zu den Reihen verfahrbar ausgebildet ist.

10. Robotersystem nach Anspruch 8 oder 9,
**dadurch gekennzeichnet,**
**dass** das Robotersystem (23) eine Mehrzahl von Robotern (22) aufweist, die zwischen den Reihen und oberhalb der Ablagepositionen (31) verfahrbar angeordnet sind.

11. Robotersystem nach einem der Ansprüche 7 bis 10,
**dadurch gekennzeichnet,**
**dass** die Fördervorrichtung (29) je genanntem Legetisch (18) eine Ablageposition (31) ausbildet, wobei die Ablageposition benachbart dem Legetisch angeordnet ist.

12. Robotersystem nach einem der Ansprüche 7 bis 11,
**dadurch gekennzeichnet,**
**dass** eine genannte Ablageposition (31) mit Anschlägen und/oder einer Zentriereinrichtung zur lagegenauen Anordnung von genannten Blechen (16) ausgebildet ist.

13. Robotersystem nach einem der Ansprüche 7 bis 12,
**dadurch gekennzeichnet,**
**dass** ein genannter Legetisch (18) mittels eines selbstfahrenden Wagens (28) des Robotersystems (23) transportierbar ist.

## Claims

1. A method for producing transformer cores (12) by means of a robot system (23), sheets of metal (16) from which a transformer core is constructed being received on at least two stacking tables (18) by means of a multiaxial robot (22) of the robot system, the sheets of metal being supplied to the robot and being stacked adjacent to the robot in at least two storage positions (31) for different said sheets of metal by means of a conveyor device (29), the robot and the conveyor device being controlled by a control device (17), said sheets of metal being collected from the storage positions and stacked on the stacking tables by means of the robot disposed between and above the stacking tables, the stacking tables each comprising at least two threading bolts (20) and/or sheet-metal abutments which serve as positioning aids for the sheets of metal (16), the stacking table forming a positioning surface (26) for the threading bolts and/or the sheet-metal abutments and being equipped with the threading bolts and/or the sheet-metal abutments
**characterized in that**
the stacking tables and the threading bolts and/or the sheet-metal abutments are realized such that a free positioning and location-independent fastening of the threading bolts and/or the sheet-metal abutments within the positioning surface is possible at any position of the positioning surface.

2. The method according to claim 1,
**characterized in that**
the control device (17) adjusts a stacking sequence of the sheets of metal (16) on the stacking tables (18) as a function of an availability of the sheets of metal in the storage positions (31).

3. The method according to claim 1 or 2,
**characterized in that**
the robot (22) removes a single said sheet of metal (16) or a sheet-metal bundle of said sheets of metal from a said storage position (31).

4. The method according to any one of the preceding claims,
**characterized in that**
a plurality of transformer cores (12) is constructed on one of the stacking tables (12).

5. The method according to any one of the preceding claims,
**characterized in that**
control commands are transmitted to the control device (17) by a control system (13) of an installation (10) for producing transformer cores (12) as a function of component data describing a transformer core.

6. The method according to claim 5,
**characterized in that**
a positioning of said threading bolts (20) and/or sheet-metal abutments on the stacking tables (18), the storage positions (31) for the respective sheets of metal (16) and/or a cutting sequence of a cutting device (30) for the sheets of metal is identified by means of the control system (13).

7. A robot system (23) for producing transformer cores (12), the robot system comprising a multiaxial robot (22); at least two stacking tables (18) for receiving sheets of metal (16) from which a transformer core can be constructed; a conveyor device (29) for supplying the sheets of metal; and a control device (17) for controlling the robot and the conveyor device, the conveyor device having at least two storage positions (31) intended for different said sheets of metal and disposed adjacent to the robot, the respective sheets of metal being supplied to the storage positions and stacked in the storage positions, the robot being disposed between and above the stacking tables, said sheets of metal being collected from the storage positions and stacked on the stacking tables by means of the robot, the stacking tables each comprising at least two threading bolts (20) and/or sheet-metal abutments which serve as positioning aids for the sheets of metal (16), the stacking table forming a positioning surface (26) for the threading bolts and/or the sheet-metal abutments and being equipped with the threading bolts and/or the sheet-metal abutments **characterized in that**
the stacking tables and the threading bolts and/or the sheet-metal abutments are realized such that a free positioning and location-independent fastening of the threading bolts and/or the sheet-metal abutments within the positioning surface is possible at any position of the positioning surface.

8. The robot system according to claim 7,
**characterized in that**
the robot (22) is disposed between two parallel rows of at least two or more stacking tables (18) in each instance.

9. The robot system according to claim 8,
**characterized in that**
the robot (22) is realized so as to be displaceable parallel to the rows.

10. The robot system according to claim 8 or 9,
**characterized in that**
the robot system (23) comprises a plurality of robots (22) which are disposed in a displaceable manner between the rows and above the storage positions (31).

11. The robot system according to any one of the claims 7 to 10,
**characterized in that**
the conveyor device (29) forms one storage position (31) per said stacking table (18), the storage position being disposed adjacent to the stacking table.

12. The robot system according to any one of the claims 7 to 11,
**characterized in that**
a said storage position (31) is realized having abutments and/or a centering device for precisely disposing said sheets of metal (16).

13. The robot system according to any one of the claims 7 to 12,
**characterized in that**
a said stacking table (18) is transported by means of a self-propelling cart (28) of the robot system (23).

## Revendications

1. Procédé pour la production des noyaux de transformateur (12) au moyen d'un système robotisé (23), des tôles (16) de laquelle un noyau de transformateur est construit étant reçues sur au moins deux tables d'empilage (18) au moyen d'un robot (22) multiaxial du système robotisé, les tôles étant fournies au robot et étant empilées adjacent au robot dans au moins deux positions de stockage (31) pour desdites tôles différentes au moyen d'un dispositif de convoyeur (29), le robot et le dispositif de convoyeur étant commandés par un dispositif de commande (17), lesdites tôles étant collectées à partir de positions de stockage et étant empilées sur les tables d'empilage au moyen du robot disposé entre et au-dessus de tables d'empilage, les tables d'empilage chaque comprenant au moins deux boulons de filetage (20) et/ou deux appuis de tôle qui servent comme aides de positionnement pour les tôles (16), les tables d'empilage formant une surface de positionnement (26) pour les boulons de filetage et/ou les appuis de tôle et étant équipées des boulons de filetage et/ou des appuis de tôle
**caractérisé en ce que**
les tables d'empilage et les boulons de filetage et/ou les appuis de tôle sont réalisés de telle manière qu'un positionnement libre et une fixation de boulons de filetage et/ou d'appuis de tôle de manière indépendante de lieu dans la surface de positionnement est possible à quelconque position de la surface de positionnement.

2. Procédé selon la revendication 1,
**caractérisé en ce que**
le dispositif de commande (17) ajuste une séquence d'empilage de tôles (16) sur les tables d'empilage (18) en fonction d'une disponibilité de tôles dans les positions de stockage (31).

3. Procédé selon la revendication 1 ou la revendication 2,
**caractérisé en ce que**
le robot (22) enlève ladite tôle (16) singulière ou un paquet desdites tôles de ladite position de stockage (31).

4. Procédé selon l'une quelconque des revendication précédentes,
**caractérisé en ce**
**qu'**une pluralité de noyaux de transformateur (12) est construite sur une de tables d'empilage (12).

5. Procédé selon l'une quelconque des revendication précédentes,
**caractérisé en ce que**
des commandes sont transmises au dispositif de commande (17) par un système de commande (13) d'une installation (10) pour la production de noyaux de transformateur (12) en fonction de données de composant décrivant un noyau de transformateur.

6. Procédé selon la revendication 5,
**caractérisé en ce**
**qu'**un positionnement desdits boulons de filetage (20) et/ou desdits appuis de tôle sur les tables d'empilage (18), les positions de stockage (31) pour les tôles (16) respectives et/ou une séquence de coupure d'un dispositif de coupure (30) pour les tôles sont identifiés au moyen du système de commande (13).

7. Système robotisé (23) pour la production des noyaux de transformateur (12), le système robotisé comprenant un robot (22) multiaxial, au moins deux tables d'empilage (18) pour la réception de tôles (16) de laquelle un noyau de transformateur peut être construit, un dispositif de convoyeur (29) pour l'alimentation en tôles et un dispositif de commande (17) pour la commande du robot et du dispositif de convoyeur, le dispositif de convoyeur ayant au moins deux positions de stockage (31) destinées à lesdites tôles différentes et disposées adjacent au robot, les tôles respectives étant fournies aux positions de stockage et étant empilées dans les positions de stockage, le robot étant disposé entre et au-dessus de tables d'empilage, lesdites tôles étant collectées à partir de positions de stockage et étant empilées sur les tables d'empilage au moyen du robot, les tables d'empilage chaque comprenant au moins deux boulons de filetage (20) et/ou deux appuis de tôle qui servent comme aides de positionnement pour les tôles (16), les tables d'empilage formant une surface de positionnement (26) pour les boulons de filetage et/ou les appuis de tôle et étant équipée de boulons de filetage et/ou d'appuis de tôle
**caractérisé en ce que**
les tables d'empilage et les boulons de filetage et/ou les appuis de tôle sont réalisés de telle manière qu'un positionnement libre et une fixation de boulons de filetage et/ou d'appuis de tôle de manière indépendante de lieu dans la surface de positionnement est possible à quelconque position de la surface de positionnement.

8. Système robotisé selon la revendication 7,
**caractérisé en ce que**
le robot (22) est disposé entre deux files d'au moins deux ou plusieurs tables d'empilage (18) à chaque fois.

9. Système robotisé selon la revendication 8,
**caractérisé en ce que**
le robot (22) est réalisé de manière à être déplaçable parallèlement aux files.

10. Système robotisé selon la revendication 8 ou la revendication 9, **caractérisé en ce que**
le système robotisé (23) comprend une pluralité de robots (22) qui sont disposés de manière déplaçable entre les files et au-dessus des positions de stockage (31).

11. Système robotisé selon l'une quelconque des revendications 7 à 10, **caractérisé en ce que**
le dispositif de convoyeur (29) forme une position de stockage (31) par ladite table d'empilage (18), la position de stockage étant disposée adjacent à la table d'empilage.

12. Système robotisé selon l'une quelconque des revendications 7 à 11, **caractérisé en ce que**
ladite position de stockage (31) est réalisé de manière à avoir d'appuis et/ou un dispositif de centrage pour le positionnement exact desdites tôles (16).

13. Système robotisé selon l'une quelconque des revendications 7 à 12, **caractérisé en ce que**
ladite table d'empilage (18) est transportée au moyen d'un chariot automoteur (28) du système robotisé (23).
